## Europäisches Patentamt
## European Patent Office
## Office européen des brevets

(19)

(11) Numéro de publication: **0 101 336**

**B1**

(12)

# FASCICULE DE BREVET EUROPÉEN

(45) Date de publication du fascicule du brevet:
02.08.89

(51) Int. Cl.⁴: **G 06 F 15/68**

(21) Numéro de dépôt: **83401286.6**

(22) Date de dépôt: **21.06.83**

(54) **Appareil de génération d'un signal vidéo traité, à contraste amélioré pour radiologie, et procédé pour traiter un tel signal.**

(30) Priorité: **21.06.82 US 390512**

(43) Date de publication de la demande:
**22.02.84 Bulletin 84/8**

(45) Mention de la délivrance du brevet:
**02.08.89 Bulletin 89/31**

(84) Etats contractants désignés:
**DE FR GB IT NL**

(56) Documents cité:
**IBM JOURNAL OF RESEARCH AND
DEVELOPMENT, vol. 17, no. 3, mai 1973, pages 206-
218, New York, US; C.K. CHOW et al.: "X-ray image
subtraction by digital means"
JOURNAL OF NUCLEAR MEDICINE, vol. 11, no. 11,
novembre 1970, pages 680-688, New York, US; W.L.
ASHBURN et al.: "Digital and analog processing of
anger camera data with a dedicated computercontrolled system"**

(73) Titulaire: **THOMSON- CSF, 51, Esplanade du
Général de Gaulle, F-92800 Puteaux (FR)**

(72) Inventeur: **Kurger, Robert A., THOMSON- CSF
SCPI 173, bld Haussmann, F-75379 Paris Cedex 08
(FR)**
Inventeur: **Baron, Stanley N., THOMSON- CSF
SCPI 173, bld Haussmann, F-75379 Paris Cedex 08
(FR)**
Inventeur: **Ping, Yu Liu, THOMSON- CSF SCPI 173,
bld Haussmann, F-75379 Paris Cedex 08 (FR)**

(74) Mandataire: **Ballot, Paul Denis Jacques, Cabinet
Ballot- Schmit 84, avenue Kléber, F-75116 Paris
(FR)**

LIBER, STOCKHOLM 1989

EP 0 101 336 B1

**Description**

L'invention se rapporte à un appareil de génération d'un signal vidéo traité à contraste amélioré pour la réalisation d'images radiographiques et, plus particulièrement, à un appareil et un procédé permettant d'obtenir des images perfectionnées d'une anatomie opacifiée à l'aide d'un appareil de type fluoroscopique combiné à un videoprocesseur.

Un appareil type de fluoroscopie à rayons X comprend une source à rayons X et un renforçateur d'image utilisé pour détecter les rayons X. La sortie du renforçateur d'image est enregistrée par une caméra de télévision et le signal de télévision résultant peut être envoyé sur un moniteur et/ou enregistré. Lorsqu'un corps, tel que celui d'un patient, est interposé entre la source de rayons X et le déctecteur, ces rayons sont absorbés à différents degrés, selon l'épaisseur et la composition des différentes parties du corps. La représentation résultante est une image en deux dimensions susceptible d'être utilisée, par exemple pour le diagnostic de certaines anomalies de structure à l'intérieur du corps.

L'aptitude à "lire" cette structure dans le corps grâce à la technique ainsi décrite dépend des propriétés d'absorption des rayons X de la structure en question par rapport à celles du ou des organes avoisinants de la structure. Plus la différence est grande, plus le "contraste" de la structure en question sur l'image de télévision augmente. Plus le contraste augmente, plus la netteté de la structure croît dans l'image. Par conséquent, réaliser un contraste poussé est une qualité que ce procédé de visualisation doit satisfaire.

On utilise des agents de contraste radiographiques pour créer une grande différence de comportement à l'absorption des rayons X alors qu'il n'y en avait pas ou quasiment pas auparavant. Par exemple, les vaisseaux sanguins sont pratiquement invisibles sur les images fluoroscopiques (exception faite au niveau du thorax) étant donné que le comportement à l'absorption des rayons X du sang, des muscles, des tissus graisseux et mous est similaire. Les agents de contraste radiographiques contiennent des matières (air, baryum, iode par exemple) dont les propriétés d'absorption des rayons X sont différentes de celles du sang, des muscles, des tissus graisseux ou mous. Par exemple, lorsqu'on injecte une dose de produit de contraste liquide, iodé, dans une artère ou une veine, la structure vasculaire reçoit un contraste artificiellement accentué sur une image radiographique tant que le produit de contraste persiste dans un certain segment vasculaire.

On a eu recours précédemment au traitement vidéo numérique pour améliorer l'image radiographique. Les techniques de traitement numérique satisfaisantes de l'antériorité en vue d'améliorer le contraste de l'image on tiré profit de la connaissance "à priori" du comportement dans le temps des produits de contraste opacifiants. Par isolement et visualisation du flux de ces opacifiants dans les artères ou des organes prédéterminés du corps humain, il est possible d'obtenir des informations anatomiques et physiologiques sur la fonction des organes sans qu'il soit nécessaire de procéder à une cathétérisation sélective, avec les risques que ceci comporte.

Le mode de visualisation dit par masque est une forme directe de visualisation par soustraction, en fonction du temps, complétée par un traitement numérique. Un patient est placé sur une table de radiographie et l'on choisit la zone d'intérêt afin de l'examiner, par exemple la carotide ou la cavité cardiaque. On enfonce une petite aiguille dans une veine du bras et l'on y injecte ensuite 30 à 50 ml d'opacifiant iodé type. Avant l'injection, on forme une image numérique simple sur plusieurs trames vidéo (essentiellement entre une et quatre) que l'on enregistre dans une mémoire numérique. On injecte ensuite rapidement l'opacifiant (par exemple entre 3 et 5 secondes); il passe dans la partie droite de la cavité cardiaque, puis dans les poumons et enfin dans la partie gauche de la cavité d'où il est pompé dans le système artériel du corps humain. Lorsque l'opacifiant passe dans la zone intéressée, une séquence d'images supplémentaires est mémorisée dans une seconde mémoire numérique. Chacune de ces images de post-opacification est soustraite dans l'ordre de l'image mémorisée avant l'injection. Les images de soustraction ainsi formées ont été synthetisées à raison d'une image/seconde environ de manière à des structures artérielles relativement fixes. Pour les structures cardiaques rapides, cette cadence a été portée entre 15 et 60 images/seconde environ. Cette technique est en partie décrite dans IBM Jorunal of Research and Development vo. 17, n° 3, Mai 1973, pages 206 - 218.

Les images de soustraction en fonction du temps ainsi formées ne devraient afficher, idéalement, que l'anatomie cardiovasculaire opacifiée. En l'absence de mouvement du patient, le contraste image dû à l'anatomie non opacifiée, telle que celle des os par exemple, est supprimé. La suppression des informations images étrangeres permet d'améliorer le contraste des structures opacifiées. Après cette amelioration, les images de soustraction sont reconverties en format vidéo puis mémorisées, par exemple sur bande ou disque magnétoscopique. Le traitement complet et la mémorisation externe peuvent se faire en temps réel alors que le patient est sur la table.

Il est divulgué une technique grâce à laquelle on emploie un filtrage récursif pour filtrer les signaux vidéo provenant de la radiographie avec une fonction filtrante dont la fréquence temporelle correspond essentiellement à la fréquence temporelle escomptée du mouvement de la dose d'opacifiant dans la région du corps visualisée. L'image vidéo ainsi traitée tend à améliorer les parties de l'image où l'opacifiant a circulé tout en attenuant le rôle des tissus fixes et de ceux se déplaçant à une vitesse temporelle notablement supérieure à celle du pic de la bande passante.

Bien que les techniques de filtrage récursives et par soustraction décrites soient utilisées avec succès dans la pratique pour améliorer les images radiographiques, l'un des objets de la présente invention est de présenter une technique d'amélioration d'image vidéo qui comporte également d'autres perfectionnements.

La technique décrite plus haut peut être considérée comme un filtrage rétrospectif qui rejette la plupart des

EP 0 101 336 B1

données (par exemple les cadres vidéo autres que ceux qui font l'objet de la soustraction). La technique de filtrage récursif en question choisit d'autre part une caractéristique du filtre de façon prospective, le choix du filtre étant basé sur des hypothèses a priori quant à la forme de la courbe de dilution de l'opacifiant. A ce sujet, les techniques de l'antériorité représentent des compromis.

La présente invention utilise essentiellement toutes les données acquises et comprend également la connaissance rétrospective des caractéristiques de visualisation réelles de la region intéressée du corps lors du passage de la dose d'opacifiant.

Selon l'une des formes de réalisation de l'invention, il est prévu un appareil et un procédé de formation d'un signal vidéo traité représentatif d'une image d'un corps. Une source de radiation peut être dirigée sur le corps et des dispositifs sont prévus pour détecter les radiations reçues du corps et convertir ces radiations détectées en un signal vidéo électronique. Des dispositifs sont prévus pour mémoriser une série de cadres du signal vidéo sous forme de valeurs de points numériques. Ces valeurs de points numériques sont généralement représentatives de la caractéristique d'absorption des radiations de la partie du corps humain correspondant à la position des points élémentaires du cadre, bien qu'il soit entendu que d'autres caractéristiques, telles que la transmission, puissent être traitées suivant ces mêmes principes en cas de besoin. Il est prévu un dispositif pour déterminer pour chaque trame, i, de la série une valeur de point moyenne Si correspondant de la trame. Des moyens ont également été prévus pour déterminer pour chaque trame, i, de la série, une valeur d'amélioration (ou coefficient de filtre), ki, en fonction de Si. Cette valeur d'amélioration ki est déterminée de préférence comme la différence de Si et S, ou S est la moyenne de Si sur la séquence de trames. La valeur d'amélioration Ki peut être soit positive, soit négative. D'autres dispositifs ont également été appliqués pour combiner les valeurs des points de chacune des trames mémorisées, i, avec la valeur d'amélioration ki de la trame, de manière à obtenir des valeurs de points améliorées. Des moyens sont aussi prévus pour combiner les valeurs améliorées des points correspondants des trames de la séquence afin d'obtenir une valeur traitée pour chaque emplacement de point. Ces valeurs traitées peuvent être converties sous forme analogique en vue de leur visualisation.

Dans la présente forme de réalisation, les densités d'absorption utilisées pour déterminer ki pour chaque trame i sont obtenues dans une partie prédéterminée du cadre définie par la surface d'une fenêtre. Si l'on choisit la surface de la fenêtre de manière à inclure la plupart ou la totalité de la région du corps intéressée que la dose de produit contrastant traversera lors de la séquence de la trame traitée, en limitant la détermination de ki pour appliquer la valeur des points dans la fenêtre, la caractéristique de filtre sélective obtenue fournira une meilleure "adaptation" à la réponse temporelle de la dose que si l'on considérait l'ensemble de la surface de la trame pour cette détermination.

Les demandeurs ont considéré que la technique de la présente invention apportait une amélioration au rapport signal/bruit qui permettait, en comparaison des techniques de l'antériorité, des réductions très importantes dans la dose de produit contrastant nécessaire pour obtenir une image de qualité donnée.

D'autres caractéristiques et avantages de l'invention apparaîtront plus facilement dans la description détaillée suivante que l'on utilisera conjointement avec les planches de dessins jointes;

- la figure 1 est un schéma simplifié d'un appareil conforme à l'invention, que l'on peut utiliser pour mettre en pratique le procédé de l'invention;
- la figure 2 est un organigramme de contrôle de base de la circuiterie de traitement de la forme de réalisation de la figure 1;
- la figure 3 est un organigramme illustrant l'acheminement de la passe I.
- la figure 4 est un organigramme de l'acheminement de la figure 2 permettant de déterminer S;
- la figure 5 est un organigramme de l'acheminement de la passe II de la figure 2.

**Description de la forme de realisation préférée**

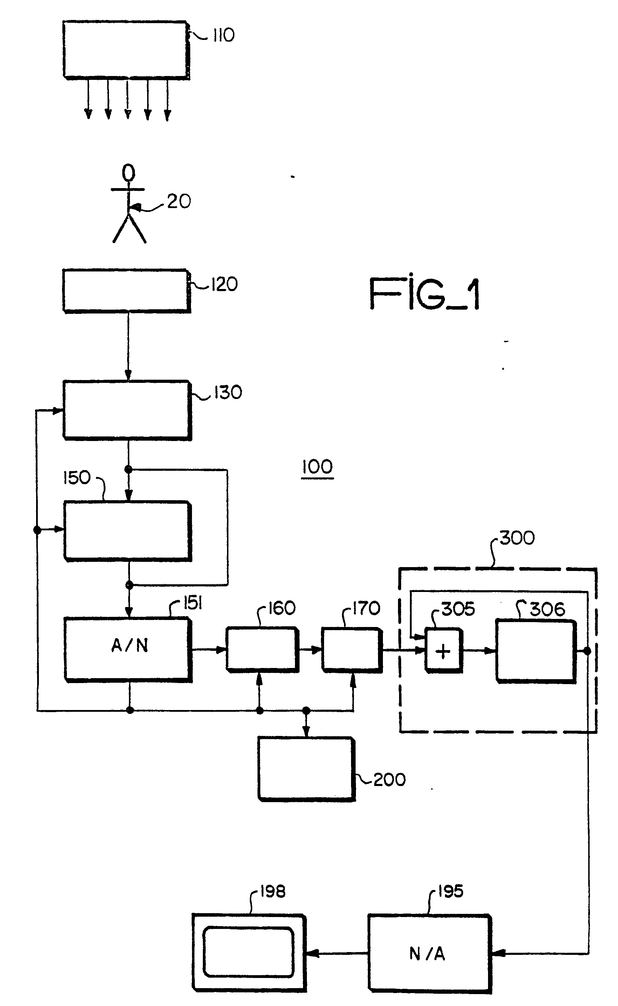

On se réfèrera à la figure 1 qui illustre un schéma simplifié d'un appareil 100 donnant une image visualisée de la structure interne du corps 20. L'appareil 100 comprend, de façon classique, une source de radiation 100, constituée essentiellement par une source de rayons X, un détecteur 120 et un générateur vidéo 130. La combinaison du détecteur et du générateur vidéo peut comprendre, par exemple, un renforçateur d'image radiographique ainsi qu'une caméra de télévision. La sortie du générateur vidéo 130 est couplée à un magnétoscope 150 ainsi qu'à un convertisseur analogique-numérique 151 qui convertit le signal de télévision en signal numérique. La sortie de l'enregistreur 150 est également couplée au convertisseur 151. Le matériel nécessaire pour obtenir un signal de télévision numérique est bien connu dans ce secteur de la technique et existe commercialement; à titre d'exemple on peut citer le modèle AD-96A310 fabriqué par THOMSON-CSF Broadcast, Inc. A chaque point de la trame, le convertisseur de signaux de télévision engendre un signal numérique de huit bits représentant des 256 graduations du niveau de luminance (pour un signal monochrome, tel qu'il est considéré dans la forme de réalisation présentement illustrée). Le magnétoscope 150 peut être constitué par n'importe quel type de dispositif d'enregistrement adequat, magnétoscope ou enregistreur sur disques. Le générateur vidéo, le magnétoscope et le convertisseur analogique-numérique reçoivent de façon classique des signaux de synchronisation et le convertisseur analogique-numérique reçoit également des

3

signaux d'horloge à la cadence des points.

La sortie du convertisseur analogique-numérique 151 est couplée à la circuiterie de traitement 200 qui peut comprendre un calculateur numérique de type général, un microprocesseur ou une électronique numérique spéciale. La sortie du convertisseur analogique-numérique 151 est couplée également à un accumulateur arithmétique 160 qui, de son côté, est contrôlé par le processeur 200 avec lequel il communique. Le générateur vidéo 130 et le magnétoscope 150 sont également contrôlés par le processeur 200. Celui-ci peut comprendre, par exemple, un microprocesseur modèle 68000 fabriqué par Motorola Corporation ou une version appelée "micro-processeur par tranches" de celui-ci.

La sortie du convertisseur numérique-analogique 151 est également couplée à un circuit multiplicateur 170 contrôlé par le processeur 200. La sortie du circuit multiplicateur est couplée à un autre accumulateur 300 qui comprend une mémoire trame 305 et un circuit de totalisation 306. La sortie de l'accumuiateur 300 est couplée à un convertisseur numérique-analogique 195 dont la sortie est couplée à l'écran 198 et à un magnétoscope, pouvant être constitué par l'enregistreur 150. On suppose également que les signaux de concordance verticaux et horizontaux, ainsi que les signaux d'horloge, sont fournis de façon classique par la circuiterie de génération, synchronisation et horloge, non représentée.

Avant de décrire le fonctionnement du système et son contrôle, nous allons développer quelques considérations théoriques.

Un schéma de filtrage dans le temps de type quelconque peut être représenté dans le domaine de la fréquence par sa réponse de fréquence temporelle associée (amplitude et phase) ou dans le domaine temps par sa réponse impulsionnelle. Considérons le domaine temps. Si l'on désigne un signal d'entrée de filtre par s(t) et la réponse aux impulsions de ce filtre par f(t), la sortie du filtre, s'(t) est donnée par:

$$s'(t) = s(t) * f(t) \tag{1}$$

$$= \int_{-\infty}^{\infty} s(t') \; f(t-t') \; dt', \tag{2}$$

où désigne la convolution. Si le signal est constitué par un jeu d'échantillons discrets de s(t), répartis sur T secondes, la sortie du filtre est une somme discrète donnée par:

$$s'[i] = \sum_{j=-\infty}^{\infty} s[j] \; f[i-j] \tag{3}$$

où s[i] est le i-ème échantillon de s(t) et f[i], le i-ème échantillon de f(t). Avec un signal d'entrée causal et un filtre causal, l'équation (3) devient:

$$s'[i] = \sum_{j=0}^{i} s[j] \; f[i-j] \tag{3'}$$

La n-ième sortie est :

$$s'[N] = \sum_{j=0}^{N} s[j] \; f[N-j] \tag{4}$$

$$s'[N] = \sum_{j=0}^{N} k_j \; s[j], \tag{4'}$$

où :

$$k_j = f[N-j]. \tag{5}$$

On peut noter que l'équation (4)' est une somme pondérée de tous les échantillons d'entrée, prenant fin au N-ième échantilion.

Toute approche de filtrage fonctionnant sur un jeu discret d'échantillons de données peut être considérée comme une combinaison linéaire des échantillons de données. Vue sous cet angle, la visualisation par soustraction en mode de masque, examinée à la lueur de cela, constitue un cas particulier de filtrage rétrospectif où $k_j$ de l'équation (4)' est choisi comme suit:

$$k_j = \begin{cases} 1, & j = \ell \\ -1, & j = m, \\ 0, & \text{tous autres } j. \end{cases}$$

Le l-ième échantillon est choisi près du temps d'opacification maximale et le m-ième échantillon à un temps correspondant à une faible opacification. Les autres echantillons N-2 sont rejetés.

Dans le filtrage récursif décrit plus haut, la plupart des valeurs $k_j$ sont différentes de zéro. On utilise par suite chaque échantillon de données, mais les valeurs de $k_j$ mises en relation avec la réponse du filtre aux impulsions, sont choisies de façon prospective (par exemple pour adapter la réponse de la dose dans le temps). Elles ne sont pas influencées par la connaissance spécifique du jeu d'échantillons (s [j]).

On peut par suite considérer les techniques par soustraction comme un procedé de filtrage rétrospectif qui rejette la plupart des données. Le filtrage récursif, tout en utilisant la plupart des données, utilise un filtre rétrospectif fixe dont le choix est base sur des hypothèses a priori quant à la forme de la courbe de dilution de l'opacifiant. Chaque méthode constitue un compromis.

La présente méthode de filtrage qui utilise essentiellement toutes les données acquises et qui incorpore une connaissance retrospective de (s [j]) possède les avantages de ces deux approches de visualisation. Si l'on considère le jeu d'échantillons (s [j]), le choix de $k_j$ peut se faire de manière à optimiser:

$$\sum_{j=0}^{N} k_j \, s[j] \quad \text{suivant un critère choisi. Si l'on choisit}$$

$k_j$ de manière que le rapport signal/bruit de la N-ième sortie soit maximisé tout en éliminant simultanément l'anatomie à fond fixe, le signal (5) et le bruit (n) associés à un seul point sont exprimés de la façon suivante dans cette technique de filtrage:

$$S \equiv s'[N] = \sum_{j=0}^{N} k_j \, s[j], \tag{6}$$

$$n \equiv \left[ \sum_{j=0}^{N} k_j^2 \, \sigma^2 \right]^{\frac{1}{2}}, \tag{7}$$

où $\sigma$ est la déviation standard du bruit par point, dans le cas de chaque échantillon. L'équation (7) suppose que le bruit de l'echantillon ($\sigma$) est sans corrélation, d'un échantillon à l'autre et que $\sigma$ est indépendant de j. Afin de s'assurer que l'anatomie de fond fixe est bien annulée à la N-ième sortie, nous imposons la condition:

$$\sum_{j=0}^{N} k_j = 0.$$

Dans ces conditions, l'équation (6) peut être réécrite comme suit:

$$S = \sum_{j=0}^{N} k_j \, s[j] = \sum_{j=1}^{N} k_j \, (s[j] - c), \tag{8}$$

où c est une constante arbitraire. S/n est maximisé en posant:

$$\frac{\partial\,(S/n)}{\partial\,k_i} = 0, \qquad i = 0, 1, \ldots N. \tag{9}$$

Par substitution des équations (7) et (8) dans (9) et en résolvant $k_i$ nous obtenons l'expression suivante:

$$k_i = \left[ \frac{\sum\limits_{j=0}^{N} k_j^2}{\sum\limits_{j=0}^{N} k_j \cdot (s[j]-c)} \right] (s[i]-c), \quad i = 0,1,\ldots N. \tag{10}$$

et l'équation 10 peut être réécrite comme suit:

$$k_i = a\,([k_j])\,(s[i]-c), \qquad i = 0,1,\ldots N, \tag{11}$$

où $a\,([k_j])$ est une constante de proportionalité qui dépend de $[k_j]$:

$$\frac{\sum\limits_{j=0}^{N} k_j^2}{\sum\limits_{j=0}^{N} k_j\,(s[j]-c)} = a\,([k_j])$$

Afin de déterminer la façon dont la quantité $a\,([k_j])$ affecte S/n, introduisons l'équation (12) dans les équations (7) et (8) et evaluons S/n de manière à obtenir:

$$\frac{S}{n} = \frac{\sum\limits_{i=0}^{N} [a\,([k_j])]\,(s[i]-c)^2}{\left\{ \sum\limits_{i=0}^{N} [a^2([k_j])]\,(s[i]-c)^2\,\sigma^2 \right\}^{\frac{1}{2}}}, \tag{13}$$

$$= \frac{\sum\limits_{i=0}^{N} (s[i]-c)^2}{\left[ \sum\limits_{i=0}^{N} (s[i]-c)^2\,\sigma^2 \right]^{\frac{1}{2}}}, \tag{14}$$

qui est indépendant de $a([k_j])$. Pour plus de simplicité, prenons $a([k_j]) = 1$. Le choix de $k_j$ qui maximise S/n est par suite:

$$k_i = s[i]-c. \tag{15}$$

Si l'on se souvient que $\sum\limits_{i=0}^{N} k_i = 0$, nous pouvons évaluer c comme suit:

$$\sum_{i=0}^{N} k_i = \sum_{i=0}^{N} (s[i] - c) = 0$$

$$\Rightarrow c = \frac{1}{N+1} \sum_{i=0}^{N} s[i] \equiv \bar{s} \tag{16}$$

où $\bar{s}$ est la moyenne de $[s(i)]$. Enfin, le choix de $k_i$ qui permet de maximiser $S/n$ est:

$$k_i = s[i] - \bar{s} \qquad i = 0,1,2, ...N. \tag{17}$$

Si l'on reprend l'équation (5), la réponse d'impulsion du filtre est:

$$f[i] = k_{N-i} = s[N-i] - \bar{s} . \tag{17'}$$

A l'aide de l'équation (17), nous pouvons évaluer $S/n$ à partir des équations (7) et (8), comme suit:

$$\frac{S}{n} = \frac{\sum_{i=0}^{N} (s[i] - \bar{s})^2}{\sigma \left[\sum_{i=0}^{N} (s[i] - \bar{s})^2\right]^{\frac{1}{2}}} = \frac{1}{\sigma}\left[\sum_{i=0}^{N} (s[i] - \bar{s})^2\right]^{\frac{1}{2}}$$

$$\frac{S}{n} = \frac{(N+1)^{\frac{1}{2}} (s[i] - \bar{s})_{rms}}{\sigma}, \tag{18}$$

où : $$(s[i] - \bar{s})_{rms} \equiv \left\{\frac{1}{N+1} \sum_{i=0}^{N} (s[i] - \bar{s})^2\right\}^{\frac{1}{2}} \tag{19}$$

et l'on n'évalue $(s[i] - \bar{s})_{eff}$ que pour les échantillons utilisés pour le filtrage. La quantité $N + 1$ est le nombre d'échantillons d'entrée retenus pour le traitement.

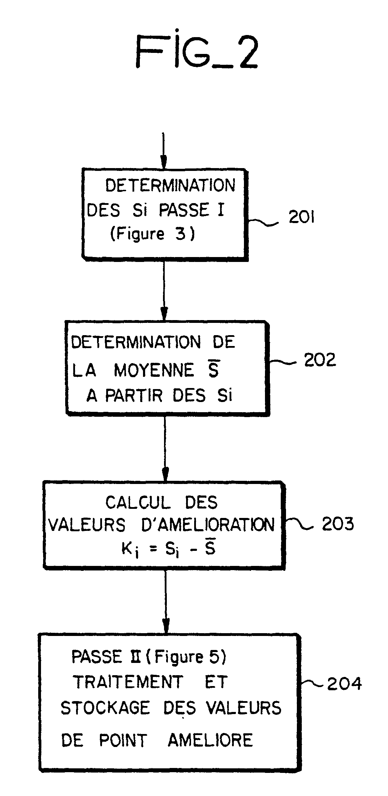

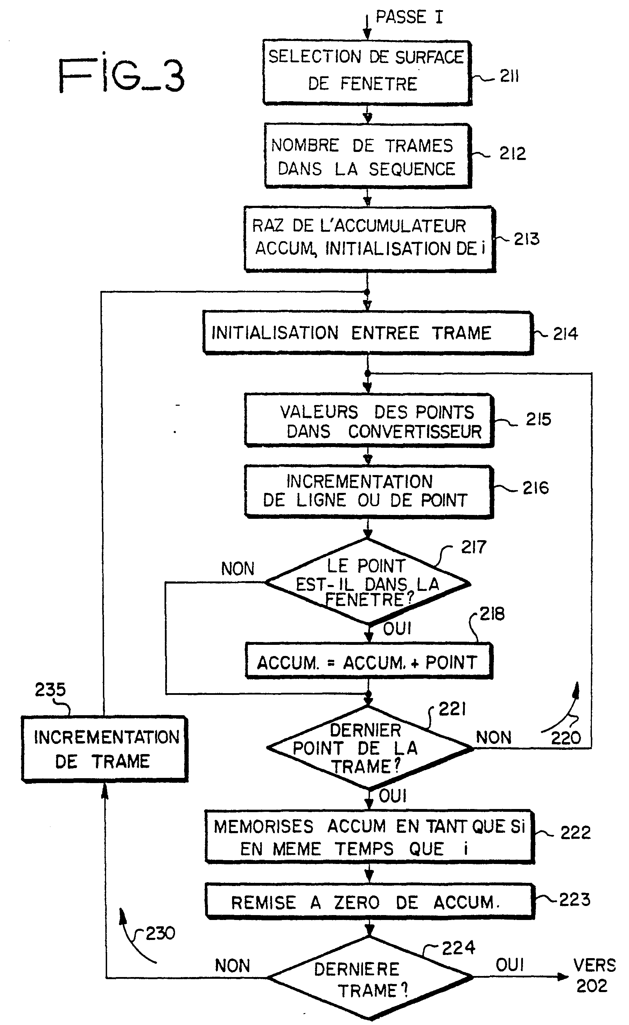

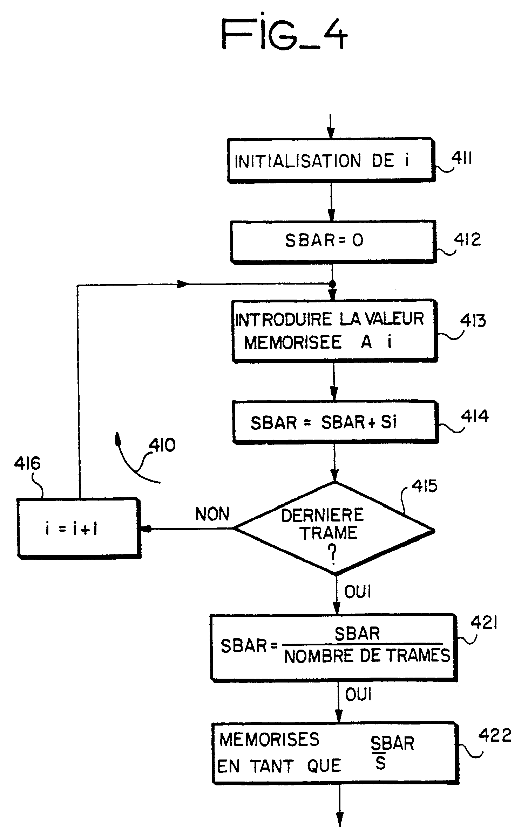

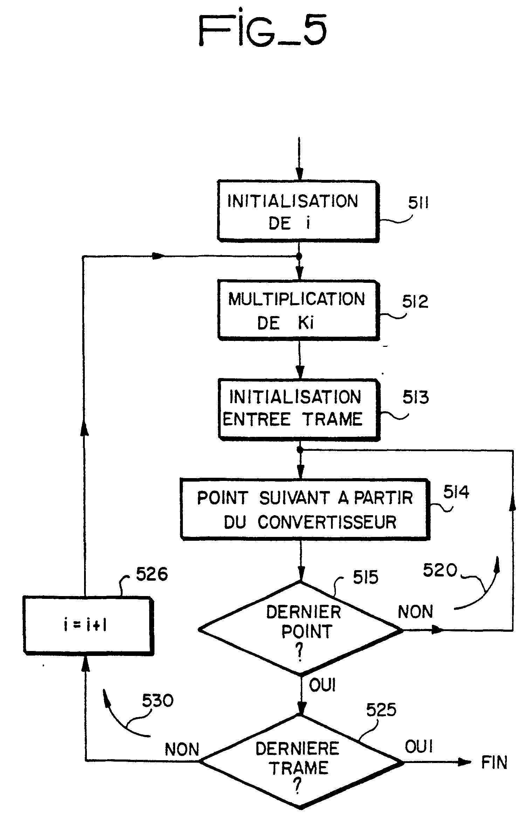

La figure 2 est un organigramme de base qui, lorsqu'on le prend conjointement avec les organigrammes correspondants, montre la façon dont le circuit de traitement 200 est programmé pour contrôler le fonctionnement du circuit de la figure 1 dans la présente forme de réalisation. Le bloc 201 représente la détermination de la valeur de point moyen Si pour chaque trame i. La routine de cette opération, appelée "passe I" est représentée sur la figure 3. Après avoir obtenu la valeur $S_i$ de chaque trame de la séquence, on prend la moyenne des valeurs $S_i$ comme représenté par le bloc 202, afin d'obtenir une valeur moyenne d'ensemble, désignée par S. La routine de cette opération est représentée à la figure 4. On obtient ainsi pour chaque trame une valeur d'amélioration $k_i$ compatible avec la relation (17) ci-dessus, comme le montre le bloc 203. La passe II est appliquée quand pour chaque cadre i de la séquence, la valeur de chaque point est multipliée par $k_i$. La routine de cette opération est illustrée sur la figure 5. Les valeurs des points améliorés de chaque trame de la séquence sont stockées dans l'accumulateur 300 (figure 1) et compatibles avec la relation (4)' ci-dessus. Au fur et à mesure que chaque valeur de point amélioré est sortie du multiplicateur 170, elle est ajoutée par le totalisateur 306 à la valeur accumulée de ce point particulier qui est réinjectée par la mémoire de trames 305. La nouvelle valeur accumulée est ensuite rétablie à la position du point particulier de la mémoire de trame 305. Lorsque toutes les trames ont été traitées, la mémoire 305 conserve la valeur désirée des points accumulés, à chaque emplacement de point.

La figure 3 illustre la routine de passe 1 qui permet d'obtenir la valeur Si de chaque trame i de la séquence. Le bloc 211 représente la sélection faite par l'opérateur de la surface de fenêtre. Comme décrit plus haut, la fenêtre définit la surface dans laquelle on obtient la valeur de point moyen, générale Si de la présente forme de réalisation. L'opérateur peut choisir la surface de fenêtre en déplaçant, par exemple, un point curseur classique vers les angles diagonalement opposés de la fenêtre et en introduisant les coordonnées de ces angles. En variante, les coordonnées des angles de la surface peuvent être entrées de façon classique au moyen d'un clavier. L'opérateur peut également entrer le nombre de trames dans la séquence à traiter (bloc 212). L'accumulateur 160 (figure 1) est remis à zéro et le numéro de trame i est initialisé en un bloc (213). Le bloc 214 représente l'entrée de la trame de visualisation suivante du générateur 150, par l'intermédiaire du convertisseur analogique/numérique 151. On introduit ensuite la boucie 220. Celle-ci représente l'application de la procédure qui donne la valeur Si moyenne de la trame i. En particulier, les valeurs des points individuels sont lues dans le convertisseur analogique-numérique 151 (bloc 215). Le numéro de ligne ou de point élémentaire, suivant le cas, est augmenté (bloc 216). On détermine (losange 217) si le point en cours se trouve ou non dans la surface de fenêtre prédéterminée. Dans l'affirmative, on introduit le bloc 218. Ce bloc représente une augmentation du chiffre totalisé dans l'accumulateur de la valeur du point en cours. Dans la négative, le bloc 218 est sauté. La détermination s'effectue alors (losange 221) si le dernier point de la fenêtre a été traité.

S'il ne l'a pas été, la boucle 220 est maintenue jusqu'à ce que la trame i soit terminée. Etant donné que, dans cette forme de réalisation, seuls les points se trouvant dans la fenêtre entrent dans la détermination de Si, il n'est pas nécessaire de poursuivre l'examen des points une fois que le point de la fenêtre situé à la partie inférieure droite a été atteint. La valeur de Si est alors mémorisée en combinaison avec i'indice de trame i (bloc 222). L'accumulateur est ensuite remis à zéro (bloc 223) puis l'on détermine (losange 224) si la dernière trame de la séquence a été traitée ou non. Dans la négative, la boucle 230 se poursuit par augmentation du numéro de trame (bloc 235) et rentrée du bloc 214. La boucle 230 est maintenue jusqu'a ce que toutes les valeurs Si de la séquence de trames aient été déterminées et mémorisées.

L'organigramme de la figure 4 représente la routine du bloc 202 de la figure 2 où l'on fait la moyenne des valeurs Si individuelles pour obtenir S. Le numéro de trame initialisé (bloc 411) et un SBAR variable, utilisé pour l'accumulation des valeurs Si est initialisé sur zéro (bloc 412). La valeur Si mémorisée, associée à i, est mise en place (bloc 413). SBAR est ensuite augmenté de la valeur Si mise en place, comme représenté par le bloc 414. On demande alors (Décision, losange 415) si l'on a atteint la dernière trame de la série. Dans la négative, le numéro de trame est augmenté (bloc 416) et la boucle 410 est maintenue jusqu'à ce que toutes les valeurs Si aient été ajoutées à SBAR. On introduit ensuite le bloc 421. Celui-ci représente la division de la somme SBAR par le nombre de trames de la série afin d'obtenir S valeur qui est ensuite mémorisée (bloc 422).

L'organigramme de la figure 5 est une représentation de la routine de passe II du bloc 204 de la figure 2 ou, pour chaque trame i de la séquence, la valeur de chaque point est multipliée par ki et la valeur améliorée du point est ajoutée à la valeur des points correspondants des autres trames de la séquence par l'accumulateur 300 (figure 1). L'indice de la trame est initialisé (bloc 511) et la valeur de l'amélioration ki est sortie vers le multiplicateur 170 (bloc 512). Les points de trame i de la séquence sont entrés dans le multiplicateur 170 (bloc 513), l'un après l'autre (bloc 514), à partir du convertisseur analogique/numérique 151. La boucle 520 est maintenue jusqu'à ce que le dernier point de la trame ait été traité (losange 515). On procède alors à une détermination (losange 525) pour savoir si la dernière trame de la séquence a été traitée ou non. Dans la négative, l'indice de trame est augmenté d'une unité (bloc 526) et la boucle 530 est maintenue jusqu'à ce que toutes les trames de la séquence aient été traitées.

La présente invention a été décrite en se référant à une forme de réalisation particulière, mais toutefois certaines variations sont possibles aux yeux des spécialistes en la matière. Par exemple, il doit être entendu qu'en cas de besoin, la mise en oeuvre de certaines phases particulières de la technique divulguée peut être réalisée par contrôle manuel ou au moyen d'une circuiterie de commande spéciale.

**Revendications**

1. Appareil de génération d'un signal vidéo traité représentatif d'une image d'un corps comprenant:

- une source de radiation (110) pouvant être dirigée sur le corps,
- un dispositif de détection (120) des radiations reçues du corps,
- un dispositif de conversion des radiations détectées en signal video électronique (130),
- un dispositif de mémorisation (150) d'une série de trames de ce signal vidéo sous forme de valeurs depoints dans chaque position de point correspondante;

caractérisé en ce qu'il comporte:

- un dispositif de détermination, pour chaque trame, i, de la série, d'une valeur de point moyenne, Si, de la trame (figure 3),
- un dispositif de détermination, pour chaque trame de la série d'un valeur d'amélioration, ki, en fonction de la valeur de point moyenne, Si, de la trame (203),
- un dispositif pour combiner les valeurs des points de chacune des trames memorisées, i, à la valeur d'amélioration, ki, de la trame afin d'obtenir des valeurs de points améliorées (figure 5) et,
- un dispositif pour combiner les valeurs améliorées des points correspondants des trames de la séquence afin d'obtenir une valeur de point traitée pour chaque position de point.

2. Appareil conforme à la définition de la revendication 1, où chaque valeur d'amélioration, ki, est obtenue à partir de la différence Si - S, où S est la moyenne des valeurs Si.

3. Appareil conforme à la définition de la revendication 1 ou 2, où le dispositif de détermination de Si pour chaque trame i agit pour totaliser les valeurs des points de la trame i.

8

4. Appareil conforme à la revendication 1 ou 2, où le dispositif de détermination de Si pour chaque trame i, agit de manière à totaliser les valeurs des points de la trame i dans une surface partielle non unitaire, présélectionnée, de la trame.

5. Appareil conforme à la définition de l'une quelconque des précédentes revendications, où chaque valeur de point est une représentation de l'absorption de rayons X de la partie élémentaire du corps, à l'emplacement du point.

6. Appareil conforme à la définition de l'une quelconque des revendications 1 à 4, ou le dispositif de combinaison des valeurs améliorées des points des trames agit de manière à ajouter ces valeurs aux points correspondants.

7. Appareil conforme à la définition de l'une des revendications 1, 4, 6, où le dispositif de combinaison des valeurs des points de chacune des trames memorisées, i, à la valeur d'amélioration ki de la trame agit de manière a multiplier chacune de ces valeurs de points de la trame i par ki.

8. Appareil conforme à la définition de l'une des revendications 1, 2, 4, 6, comprenant en outre un dispositif de conversion de ces valeurs de points traités du mode numérique en mode analogique.

9. Procédé de génération d'un signal vidéo traité représentatif d'une image d'un corps, comprenant les phases de:

- pointage des radiations sur le corps,
- détection des radiations reçues du corps,
- conversion des radiations détectées en signal vidéo électronique,
- mémorisation d'une série de trames de ce signal vidéo sous forme de valeurs de points, aux emplacements respectifs de ceux-ci,

caractérisé en ce qu'il comporte les phases de:

- détermination pour chaque trame de la série d'une valeur de point moyenne de la trame,
- détermination, pour chaque trame de la série, d'une valeur d'amélioration en fonction de la valeur de point moyenne de la trame,
- combinaison des valeurs des points de chacune des trames mémorisées à la valeur d'amélioration correspondante de la trame pour obtenit des valeurs de points améliorées et,
- combinaison des valeurs améliorées des points correspondants des trames de la séquence pour obtenir une valeur de point traitée dans chaque position de point.

10. Procédé conforme à la définition de la revendication 9, où chaque valeur d'amélioration est tirée de la différence entre la valeur de point moyenne de la trame et la moyenne des valeurs de point moyennes d'ensemble de toutes les trames de la séquence.

11. Procédé conforme à la définition de la revendication 9 ou 10, où la phase de détermination de la valeur d point moyenne de chaque trame comprend la totalisation des valeurs des points de la trame.

12. Procédé conforme à la définition des revendications 9 ou 10, où la phase de détermination de la valeur de point moyenne de dans une surface fractionnaire non unitaire, prédéterminée de la trame.

13. Procédé conforme à la définition de l'une des revendications 9, 10, 11, 12, où chaque valeur de point représente l'absorption de rayons X de la partie élémentaire du corps à l'emplacement du point.

14. Procédé conforme à la définition de l'une des revendications 9, 10, 11, 12, où la phase de combinaison des valeurs améliorées des points correspondants des trames comprend l'addition des valeurs des points correspondants.

15. Procédé conforme à la définition de l'une des revendications 9, 10, 12, 14, où la phase de combinaison des valeurs des points de chacune des trames mémorisées à la valeur d'amélioration de la trame comprend la multiplication de ces valeurs des points de la trame par la valeur d'amélioration de celle-ci.


**Patentansprüche**

1. Gerät zum Erzeugen eines verarbeiteten Videosignals, das für das Bild eines Körpers repräsentativ ist, mit:

- einer Strahlungsquelle (110), welche auf dem Körper gerichtet werden kann,
- einer Vorrichtung (120) zur Detektion der vom Körper empfangenen Strahlungen,
- einer Vorrichtung (130) zur Umsetzung der detektierten Strahlungen in ein elektronisches Videosignal,
- eine Vorrichtung (150) zur Speicherung einer Reihe von Bildrastern dieses Videosignals in Form von Punktwerten in jeder entsprechenden Punktposition;

dadurch gekennzeichnet, daß es umfaßt:

- eine Vorrichtung zur Bestimmung eines Punktdurchschnittswertes Si des Bildrasters (Figur 3) für jedes Bildraster i der Reihe,

- eine Vorrichtung (203) zur Bestimmung eines Verbesserungswertes ki für jedes Bildraster der Reihe, in Abhängigkeit des Punktdurchschnittwertes Si des Bildrasters,
- eine Vorrichtung zum Kombinieren der Punktwerte jedes der gespeicherten Bildraster i mit dem Verbesserungswert ki des Bildrasters, um verbesserte Punktwerte (Figur 5) zu erhalten, und
- eine Vorrichtung zum Kombinieren der verbesserten Werte der entsprechenden Punkte der Bildraster der Folge, um für jede Punktposition einen verarbeiteten Punktwert zu erhalten.

2. Gerät nach Definition des Anspruchs 1, in welchem jeder Verbesserungswert ki aus der Differenz Si- S erhalten ist, worin S den Durchschnitt der Si- Werte darstellt.

3. Gerät nach Definition der Ansprüche 1 oder 2, in welchen die Vorrichtung zur Bestimmung von Si für jedes Bildraster so wirkt, daß sie die Punktwerte des Bildrasters i aufsummiert.

4. Gerät nach Anspruch 1 oder 2, in welchem die Vorrichtung zur Bestimmung von Si für jedes Bildraster i so wirkt, daß sie die Punktwerte des Bildrasters i in einer vorausgewählten, nicht einheitlichen Teiloberfläche des Bildrasters addiert.

5. Gerät nach Definition eines der vorstehenden Ansprüche, in welchem jeder Punktwert eine Darstellung der Absorption der Röntgenstrahlen des Elementärteils des Körpers an der Punktstelle ist.

6. Gerät nach Definition eines der Ansprüche 1 bis 4, in welchem die Vorrichtung zum Kombinieren der verbesserten Punktwerte der Bildraster so wirkt, daß diese Werte dem entsprechenden Punkten hinzugefügt werden.

7. Gerät nach Definition eines der Ansprüche 1, 4, 6, in welchem die Vorrichtung zum Kombinieren der Punktwerte jedes der gespeicherten Bildraster i mit dem Verbesserungswert ki des Bildrasters so wirkt, daß sie jeden dieser Punktwerte des Bildrasters i mit ki multipliziert.

8. Gerät nach Definition eines der Ansprüche 1, 2, 4, 6, das ferner eine Vorrichtung zur Umsetzung dieser Werte der verarbeiteten Punkte aus dem digitalen in den analogen Bereich umfaßt.

9. Verfahren zum Erzeugen eines verarbeiteten Videosignals, das für das Bild eines Körpers repräsentativ ist, das die folgenden Schritte umfaßt:

- Richten der Strahlung auf den Körper,
- Detektion der vom Körper empfangenen Strahlung,
- Umsetzung der detektierten Strahlung in ein elektronisches Videosignal,
- Speicherung einer Reihe von Bildrastern dieses Videosignals in Form von Punktwerten an den jeweiligen Stellen dieser Punkte,

dadurch gekennzeichnet, daß es die folgenden Schritte umfaßt:

- Bestimmung eines Punktdurchschnittwertes des Bildrasters für jedes Bildraster der Reihe,
- Bestimmung eines Verbesserungswertes für jedes Bildraster der Reihe in Abhängigkeit des Punktdurchschnittwertes des Bildrasters,
- Kombination der Punktwerte jedes der gespeicherten Bildraster mit dem entsprechenden Verbesserungswert des Bildrasters, um verbesserte Punktwerte zu erhalten, und
- Kombination der verbesserten Werte der entsprechenden Punkte der Bildraster der Folge, um einen verarbeiteten Punktwert in jeder Punktposition zu erhalten.

10. Verfahren nach Definition des Anspruchs 9, in welchem jeder Verbesserungswert aus der Differenz zwischen dem Punktdurchschnittwert des Bildrasters und dem Mittelwert der Durschnittpunktwerte aller Bildraster der Folge erhalten wird.

11. Verfahren nach Definition der Ansprüche 9 oder 10, worin der Schritt zur Bestimmung des Punktdurchschnittwertes jedes Bildrasters die Summierung der Punktwerte des Bildrasters umfaßt.

12. Verfahren nach Definition der Ansprüche 9 oder 10, in welchem der Schritt zur Bestimmung des Punktdurchschnittwertes jedes Bildrasters die Addierung der Punktwerte des Bildrasters in einer vorbestimmten, nicht einheitlichen Bruchteiloberfläche des Bildrasters umfaßt.

13. Verfahren nach Definition eines der Ansprüche 9, 10, 11, 12, in welchem jeder Punktwert die Absorption der Röntgenstrahlung des Elementarteils des Körpers an der Punktstelle darstellt.

14. Verfahren nach Definition eines der Ansprüche 9, 10, 11, 12, in welchem der Schritt zum Kombinieren der verbesserten Werte der entsprechenden Punkte der Bildraster die Addierung der Werte der entsprechenden Punkte umfaßt.

15. Verfahren nach Definition eines der Ansprüche 9, 10, 12, 14, in welchem der Schritt zum Kombinieren der Punktwerte jedes der gespeicherten Bildraster mit dem verbesserten Wert des Bildrasters das Multiplizieren dieser Punktwerte des Bildrasters mit dessen Verbesserungswert umfaßt.

## Claims

1. An apparatus for the generation of a treated video signal representing the image of a body comprising:

- a radiation source (110) able to be directed onto the body,
- a device (120) for the detection of the radiation from the body,
- a device (130) for the conversion of the detected radiation into am electronic video signal (130),
- a device (150) for storing a series of frames of this video signal in the form of values of points of each position of a corresponding point;

characterized in that it comprises:

- a device for determining, for each frame i, of the series, the value of a mean point, Si, of the frame (figure 3),
- a device for determining, for each frame of the series, an improvement value, ki, as a function of the value of the mean point, Si, of the frame (203),
- a device to combine the values of the points of each of the stored frames, i, with the improvement value, ki, of the frame in order to obtain improved point values (figure 5) and,
- a device in order to combine the improved values of the corresponding points of the frames of the sequence in order to obtain a treated point value for each point position.

2. The apparatus as claimed in the definition of claim 1, in which each improvement value, ki, is obtained starting with the difference SI - S, in which Si is the mean of the Si values.

3. The apparatus as claimed in the definition of claims 1 or claim 2, in which the device for the determination of Si for each frame i acts in order to produce a total of the values of the points of the frame i.

4. The apparatus as claimed in claim 1 or in claim 2, in which the device for the determination of Si for each frame i acts in such a manner as to produce the total of the values of the points of the frame i in a non-unitary partial surface of the frame which is preselected.

5. The apparatus as claimed in the definition of any one of the preceding claims in which each point value is a representation of the absorption of the X rays of the elementary part of the body, at the site of a point.

6. The apparatus as claimed in the definition of any one of the claims 1 through 4, in which the device for the combination of the improved point values of the frames acts in such a way as to add these values to corresponding points.

7. The apparatus as claimed in the definition of any one of the claims 1, 4 and 6 in which the device for the combination of the point values of each of the stored frames, i, with the improvement value ki of the frame acts in such a manner as to multiply each of these point values of the frame i by ki.

8. The apparatus as claimed in the definition of any one of the claims 1, 2, 4 and 6, comprising furthermore a device for the conversion of these treated point values from the digital form into the analog form.

9. A method for the generation of a treated video signal representative of the image of a body, comprising the phases of:

- directing radiation towards the body,
- detection of the radiation received from the body,
- conversion of the detected radiation detected into an electronic video signal,
- storing a series of the frames of this video signal in the form of point values, at the respective sites of the latter, characterized in that it comprises the phases of:
- determination for each frame of the series of a mean point value of the frame,

determination, for each frame of the series, of an improvement value as a function of the mean point value of the frame,
- the combination of the point values of each of the stored frames with the corresponding improvement value of the frame in order to obtain improved point values, and
- the combination of the improved corresponding points of the frames of the sequence in order to obtain a treated point value in each point position.

10. The method as claimed in the definition of claim 9, wherein each improvement value is extracted from the difference between the value of the mean point of the frame and the mean of the mean point values of the totality of all the frames of the sequence.

11. The method as claimed in the definition of claim 9 or of claim 10, wherein the phase of determination of the mean point value of each frame comprises the formation of the totality of the point values of the frame.

12. The method as claimed in the definition of claims 9 or of claim 10, wherein the phase of the determination of the value of the mean point of each frame comprises the addition of the point values of the frame in a fractional and non-unitary predetermined surface of the frame.

13. The method as claimed in the definition of any one of the claims 9, 10, 11 and 12, wherein each point value represents the absorption of X-rays by the elementary part of the body at the site of the point.

14. The method as claimed in the definition of any one of the claims 9, 10, 11 and 12, wherein the phase of the combination of the corresponding improved point values of the frames comprises the addition of corresponding point values.

15. The method as claimed in the definition of any one of the claims 9, 10, 12 and 14, wherein the combination of the point values of each of the stored frames with the improvement value of the frame comprises the multiplication of these point values of the frame by the improvement value thereof.

FIG_1

# FIG_2

DETERMINATION
DES Si PASSE I
(Figure 3) — 201

DETERMINATION DE
LA MOYENNE $\bar{S}$
A PARTIR DES Si — 202

CALCUL DES
VALEURS D'AMELIORATION
$K_i = S_i - \bar{S}$ — 203

PASSE II (Figure 5)
TRAITEMENT ET
STOCKAGE DES VALEURS
DE POINT AMELIORE — 204

3

FIG_3

PASSE I

SELECTION DE SURFACE DE FENETRE — 211

NOMBRE DE TRAMES DANS LA SEQUENCE — 212

RAZ DE L'ACCUMULATEUR ACCUM, INITIALISATION DE i — 213

INITIALISATION ENTREE TRAME — 214

VALEURS DES POINTS DANS CONVERTISSEUR — 215

INCREMENTATION DE LIGNE OU DE POINT — 216

217 LE POINT EST-IL DANS LA FENETRE?
NON
OUI

218 ACCUM. = ACCUM. + POINT

235 INCREMENTATION DE TRAME

221 DERNIER POINT DE LA TRAME?
NON 220
OUI

MEMORISES ACCUM EN TANT QUE Si EN MEME TEMPS QUE i — 222

REMISE A ZERO DE ACCUM. — 223

230

224 DERNIERE TRAME?
NON
OUI VERS 202

5

# FIG_4

INITIALISATION DE i  411

SBAR = O  412

INTRODUIRE LA VALEUR
MEMORISEE  A  i  413

SBAR = SBAR + Si  414

410

416

i = i + 1

NON

DERNIERE
TRAME
?  415

OUI

$$SBAR = \frac{SBAR}{NOMBRE\ DE\ TRAMES}$$  421

OUI

MEMORISES
EN TANT QUE  $\dfrac{SBAR}{S}$  422

7

# FIG_5

INITIALISATION DE i — 511

MULTIPLICATION DE Ki — 512

INITIALISATION ENTREE TRAME — 513

POINT SUIVANT A PARTIR DU CONVERTISSEUR — 514

DERNIER POINT ? — 515
NON — 520
OUI

DERNIERE TRAME ? — 525
NON — 530
OUI — FIN

i = i+1 — 526